(19) Europäisches Patentamt
European Patent Office
Office européen des brevets

(11) **EP 1 622 251 B1**

(12) **FASCICULE DE BREVET EUROPEEN**

(45) Date de publication et mention
de la délivrance du brevet:
**04.03.2015 Bulletin 2015/10**

(51) Int Cl.:
***H02P 3/04*** (2006.01)

(21) Numéro de dépôt: **05300623.5**

(22) Date de dépôt: **27.07.2005**

(54) **Dispositif pour l'alimentation électrique d'un frein**

Einrichtung zur elektrischen Versorgung einer Bremse

Apparatus for electrical powering of a brake

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **29.07.2004 FR 0451718**

(43) Date de publication de la demande:
**01.02.2006 Bulletin 2006/05**

(73) Titulaire: **Moteurs Leroy-Somer
16915 Angouleme Cedex 9 (FR)**

(72) Inventeur: **VINCENT, Benoît
69360, TERNAY (FR)**

(74) Mandataire: **Tanty, François et al
Cabinet Nony
3, rue de Penthièvre
75008 Paris (FR)**

(56) Documents cités:
**GB-A- 2 225 679      US-B1- 6 291 952**

• **PATENT ABSTRACTS OF JAPAN vol. 003, no. 092 (E-128), 4 août 1979 (1979-08-04) & JP 54 071318 A (FUJI ELECTRIC CO LTD), 7 juin 1979 (1979-06-07)**

## Description

La présente invention concerne un dispositif pour l'alimentation d'un frein associé à un moteur électrique, notamment de levage, ce frein comportant une bobine et un organe de freinage déplaçable sous l'action d'un champ magnétique généré par la bobine, entre une position de freinage et une position de libre rotation du moteur.

Un exemple d'un tel frein est connu de FR 2 800 528.

Le maintien de l'organe de freinage en position de libre rotation du moteur peut s'effectuer avec un courant dit de maintien plus faible que le courant nécessaire pour faire passer l'organe de freinage de la position de freinage à la position de libre rotation du moteur, dit courant d'appel.

Le brevet européen EP 0 575 023 B1 divulgue un dispositif pour l'alimentation d'un frein dans lequel le courant d'alimentation de la bobine est modulé en largeur d'impulsion pour limiter la tension de maintien de l'organe de freinage en position de libre rotation du moteur.

Le brevet européen EP 1 008 932 B1 décrit un procédé dans lequel le courant d'alimentation est bloqué au cours de chaque période de temps de la tension unipolaire délivrée par un redresseur, de manière à ce que le courant d'excitation ne dépasse pas une valeur maximale imposée.

La demande GB 2 225 679 divulgue un dispositif visant à réduire la tension appliquée à la bobine de frein après son déblocage.

Par ailleurs, les dispositifs d'alimentation de frein à thyristors pilotés avec un retard à l'amorçage ou à hacheurs génèrent des fronts de tension qui sont agressifs envers l'isolation électrique de la bobine du frein, surtout lorsqu'il y a une grande longueur de câble entre l'alimentation et le frein.

Des systèmes de lissage ou d'isolation renforcée sont donc prévus, ce qui se répercute sur le coût du frein.

L'invention vise à proposer un dispositif de commande qui permette de délivrer un courant de maintien moins important que le courant d'appel et qui soit à la fois fiable et relativement simple et peu coûteux à fabriquer.

L'invention a ainsi pour objet, selon l'un de ses aspects, un dispositif d'alimentation d'un frein comportant une bobine et un organe de freinage pouvant être déplacé, sous l'action d'un champ magnétique généré par la bobine, entre une position de freinage et une position de libre rotation du moteur, ce dispositif étant à relier à une alimentation en tension sinusoïdale, de période T.

Le dispositif selon l'invention peut se caractériser par le fait qu'il est agencé pour délivrer à la bobine un courant de maintien pendant lequel la bobine est périodiquement sous-alimentée pendant une durée supérieure à T.

L'expression « sous-alimentée », dans la description et les revendications, signifie que le courant de maintien moyen d'alimentation de la bobine est moindre que le courant moyen d'appel. Lorsque la bobine est sous-alimentée, le courant prélevé à l'alimentation en tension sinusoïdale pour être envoyé dans la bobine peut être nul.

L'invention peut permettre de ne pas générer de fronts de tension agressifs envers l'isolation électrique de la bobine, cette dernière pouvant être alimentée avec une tension comportant des arches de sinusoïde.

Dans un exemple de mise en oeuvre de l'invention, le dispositif est agencé pour délivrer à la bobine un courant de maintien de période $k\dfrac{T}{2}$, avec k supérieur ou égal à 3. Pendant la durée $k\dfrac{T}{2}$ d'une période, la bobine est par exemple alimentée pendant $\dfrac{T}{2}$ et sous-alimentée voire non alimentée pendant $k\dfrac{(T-1)}{2}$.

Le dispositif peut comporter un interrupteur électronique commandé par un dispositif de contrôle comportant un compteur d'arches de sinusoïde de l'alimentation en tension sinusoïdale, l'interrupteur électronique devenant par exemple passant toutes les z arches, avec z par exemple supérieur ou égal à 3.

L'interrupteur électronique peut être disposé en amont d'un redresseur, lequel peut être un redresseur double onde.

Dans un exemple de mise en oeuvre de l'invention, l'interrupteur électronique comporte un triac.

Toujours dans un exemple de mise en oeuvre de l'invention, le dispositif comporte une diode de roue libre en aval du redresseur.

Avantageusement, le dispositif comporte un coupe circuit en série avec la bobine, ce qui permet de faire passer l'organe de freinage en position de freinage indépendamment de la coupure de l'alimentation du dispositif. De préférence, une varistance est montée en parallèle avec le coupe circuit, pour protéger ce dernier.

Le dispositif de contrôle peut comporter une temporisation pour alimenter la bobine pendant une première phase avec une conduction permanente de l'interrupteur électronique, afin de générer le courant d'appel, puis pendant une deuxième phase avec une conduction non permanente de l'interrupteur électronique, de manière à générer le courant de maintien.

L'invention a encore pour objet, selon un autre de ses aspects, un procédé pour alimenter un frein associé à un moteur électrique, ce frein comportant une bobine et un organe de freinage pouvant être déplacé, sous l'action d'un champ magnétique généré par la bobine, entre une position de freinage et une position de libre rotation du moteur, procédé dans lequel l'organe de freinage est maintenu en position de libre rotation du moteur en sous-alimentant périodiquement la bobine pendant une durée supérieure à T, notamment en la sous-alimentant pendant $k\dfrac{T}{2}$, avec k supérieur ou égal à 3. Lorsque la bobine est sous-alimentée, aucun courant n'est par exemple prélevé à l'alimentation en tension sinusoïdale.

L'invention pourra être mieux comprise à la lecture de la description détaillée qui va suivre, d'un exemple de mise en oeuvre non limitatif de celle-ci, et à l'examen du dessin annexé, sur lequel :

- la figure 1 est un schéma d'un dispositif réalisé conformément à l'invention,
- les figures 2 et 3 illustrent de manière schématique l'évolution au cours du temps de la tension d'alimentation et de celle en amont du redresseur, et
- la figure 4 représente de manière schématique un ensemble de micro-interrupteurs pouvant être utilisés pour régler divers paramètres du dispositif selon l'invention.

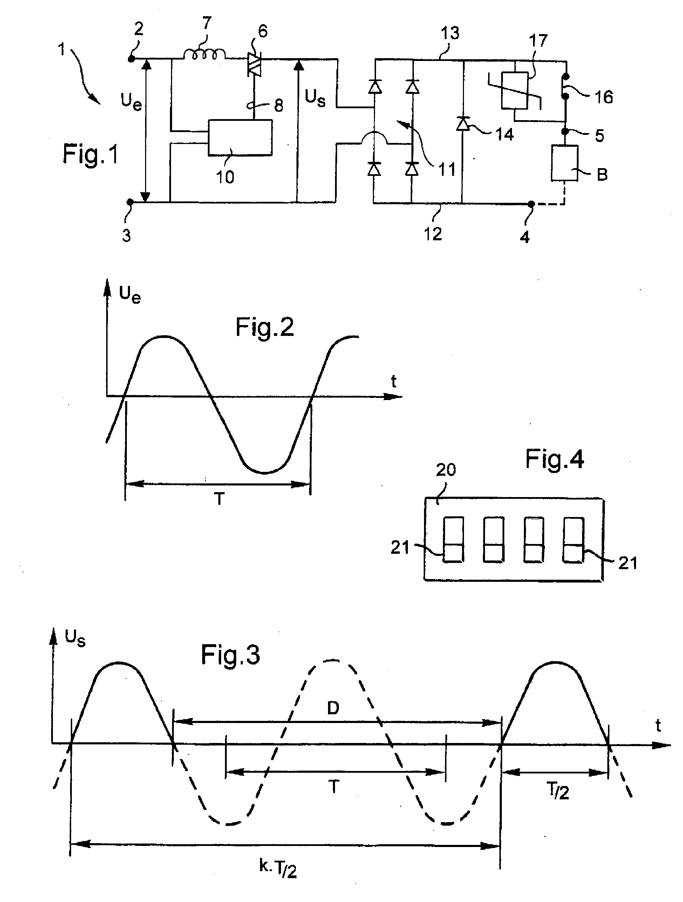

Le dispositif de commande 1 représenté à la figure 1 est destiné à être relié par des bornes d'entrée 2 et 3 à une alimentation en tension sinusoïdale, par exemple 230 V ou 400 V, de fréquence 50 Hz ou 60 Hz.
La bobine B d'un frein électromagnétique associé à un moteur non représenté est reliée par des bornes 4 et 5 au dispositif 1.
Cette bobine B permet de commander, lorsqu'excitée, le passage d'un organe de freinage non représenté d'une position de freinage du moteur à une position de libre rotation du moteur. L'organe de freinage peut être maintenu dans cette position par le champ électromagnétique généré par la bobine, contre l'action de moyens de rappel élastique.
On a représenté à la figure 2, schématiquement, l'allure de la tension sinusoïdale $U_e$, de période T, alimentant le dispositif de commande 1.
Ce dernier comporte un interrupteur électronique 6 qui est constitué dans l'exemple considéré par un triac, celui-ci étant relié par l'intermédiaire d'une self de ligne 7 à la borne d'entrée 2.
L'interrupteur électronique 6 est commandé par un dispositif de contrôle 10 alimenté par la tension $U_e$.
Dans l'exemple considéré, la gâchette 8 du triac est ainsi reliée au dispositif de contrôle 10.
Un redresseur 11 double onde est disposé en aval de l'interrupteur électronique 6 et délivre aux lignes 12 et 13 d'un bus continu une tension redressée et non filtrée.
Une diode de roue libre 14 est reliée à ce bus continu.
La bobine B est alimentée par le bus continu par l'intermédiaire d'un coupe circuit 16 aux bornes duquel est montée une varistance 17.
Le dispositif de contrôle 10 est agencé de manière à, pendant une première phase de fonctionnement, commander l'interrupteur électronique 6 de manière à ce que celui-ci conduise en permanence, de sorte qu'un courant d'appel peut être envoyé dans la bobine B pour faire passer l'organe de freinage de la position de freinage à la position de libre rotation.
Puis, dans une deuxième phase de fonctionnement, le dispositif de contrôle 10 commande l'interrupteur électronique 6 de manière à alimenter la bobine avec un courant de maintien.
La première phase dont la durée est comprise entre 100 et 1500 ms par exemple, commence par exemple à la mise sous tension du dispositif de commande 1, après éventuellement une brève phase d'initialisation dont la durée est par exemple inférieure à 40 ms.
Lors de la deuxième phase de fonctionnement, le dispositif de contrôle 10 est agencé pour commander l'interrupteur électronique 6 de telle sorte que pendant une durée D supérieure à la période T la bobine B ne soit pas alimentée, l'interrupteur électronique 6 étant alors bloqué.
Dans l'exemple considéré, le dispositif de contrôle 10 comporte un compteur qui est incrémenté par exemple à chaque fois que la tension $U_e$ franchit avec une dérivée positive une tension de seuil prédéfinie, ce qui permet de compter les arches de sinusoïde.
Le dispositif de contrôle 10 est agencé de manière à lire la valeur de ce compteur, de telle manière que l'interrupteur électronique 6 soit rendu passant après un nombre prédéfini z d'arches de sinusoïde de la tension d'entrée $U_e$, étant par exemple supérieur ou égal à 3, la durée de conduction de l'interrupteur électronique 6 correspondant par exemple sensiblement à une arche de la tension sinusoïdale d'entrée $U_e$, soit T/2, comme illustré à la figure 3.
La durée de la première phase pendant laquelle le courant d'appel est généré peut être obtenue, le cas échéant, grâce au compteur précité.
Ainsi, le redresseur 11 est alimenté par une tension $U_s$ qui, pendant la deuxième phase de fonctionnement, comporte une arche de sinusoïde de période T/2 tous les $k\dfrac{T}{2}$, avec k entier par exemple supérieur ou égal à 3, k étant égal à 4 dans l'exemple de la figure 3.
La constante de temps $\tau$ de la bobine B est choisie suffisamment grande pour que l'organe mobile ne quitte pas la position de libre rotation du moteur entre les instants où elle est alimentée. La constante de temps $\tau$ de la bobine B est de préférence supérieure ou égale à la durée D, étant par exemple comprise entre D et 2D.
Avantageusement, le dispositif de contrôle 10 est agencé de manière à permettre au fabricant et/ou à l'utilisateur de régler d'une part la durée de la première phase pendant laquelle le courant d'appel est généré, d'autre part la valeur du paramètre k ci-dessus. Ce réglage peut avantageusement s'effectuer au moyen de micro-interrupteurs 21, tel qu'illustré à la figure 4. La durée de la première phase peut par exemple être réglée par déplacement des micro-interrupteurs 21 à 100, 500, 1000 ou 1500 ms et le paramètre k est par exemple réglable entre 2 et 16.

Le dispositif de commande est avantageusement disposé dans un boîtier qui est fixé sur le carter du moteur ou dans une armoire.

Bien entendu, l'invention n'est pas limitée à l'exemple qui vient d'être décrit. On peut par exemple disposer l'interrupteur électronique 6 en aval du redresseur 11. On peut encore remplacer le redresseur 11 par un redresseur simple onde. Le dispositif de contrôle 10 peut être alimenté autrement que par l'alimentation en tension sinusoïdale. Le triac de l'exemple illustré peut être remplacé par tout autre interrupteur électronique adapté.

L'expression « comportant un » doit être comprise comme étant synonyme de « comportant au moins un », sauf si le contraire est spécifié.

## Revendications

1. Dispositif (1) pour l'alimentation électrique d'un frein associé à un moteur électrique, ce frein comportant une bobine (B) et un organe de freinage pouvant être déplacé sous l'action d'un champ magnétique généré par la bobine entre une position de freinage et une position de libre rotation du moteur, ce dispositif étant à relier à une alimentation en tension sinusoïdale de période T et étant agencé pour délivrer à la bobine un courant de maintien, pendant lequel la bobine est périodiquement sous-alimentée pendant une durée (D) supérieure à T.

2. Dispositif selon la revendication 1, **caractérisé par le fait qu'**il est agencé pour délivrer à la bobine un courant de maintien de période $k\dfrac{T}{2}$, avec k supérieur ou égal à 3.

3. Dispositif selon l'une des revendications 1 et 2, **caractérisé par le fait qu'**il comporte un interrupteur électronique (6) commandé par un dispositif de contrôle (10).

4. Dispositif selon la revendication 3, **caractérisé par le fait que** le dispositif de contrôle (10) comporte un compteur d'arches de sinusoïde de l'alimentation en tension sinusoïdale, l'interrupteur électronique devenant passant toutes les z arches, avec z supérieur ou égal à 3.

5. Dispositif selon la revendication 3 ou 4, **caractérisé par le fait que** l'interrupteur électronique (6) est disposé en amont d'un redresseur (11).

6. Dispositif selon la revendication précédente, **caractérisé par le fait que** le redresseur (11) est un redresseur double onde.

7. Dispositif selon l'une quelconque des revendications 3 à 6, **caractérisé par le fait que** l'interrupteur électronique (6) comporte un triac.

8. Dispositif selon la revendication 5 ou 6, **caractérisé par le fait qu'**il comporte une diode de roue libre (14) en aval du redresseur (11).

9. Dispositif selon l'une quelconque des revendications précédentes, **caractérisé par le fait qu'**il comporte un coupe circuit (16) en série avec la bobine (B).

10. Dispositif selon la revendication précédente, **caractérisé par le fait qu'**il comporte une varistance (17) en parallèle avec le coupe circuit (16).

11. Dispositif selon la revendication 3, **caractérisé par le fait que** le dispositif de contrôle (10) comporte une temporisation pour alimenter la bobine pendant une première phase avec une conduction permanente de l'interrupteur électronique (6), de manière à générer un courant d'appel puis, pendant une deuxième phase, avec une conduction non permanente de l'interrupteur électronique, de manière à générer un courant de maintien.

12. Procédé pour alimenter un frein associé à un moteur électrique, ce frein comportant une bobine (B) et un organe de freinage pouvant être déplacé sous l'action d'un champ magnétique généré par la bobine entre une position de freinage et une position de libre rotation du moteur, procédé dans lequel l'organe de freinage est maintenu en position de libre rotation du moteur en sous-alimentant périodiquement la bobine pendant une durée supérieure à T, notamment en la sous-alimentant pendant $k\dfrac{T}{2}$, avec k supérieur ou égal à 3.

## Patentansprüche

1. Vorrichtung (1) zur elektrischen Versorgung einer einem Elektromotor zugeordneten Bremse, die eine Spule (B) und eine Bremseinrichtung aufweist, die unter der Wirkung eines von der Spule erzeugten Magnetfelds zwischen einer Bremsstellung und einer Stellung zur freien Drehung des Motors verlagert werden kann, wobei die Vorrichtung mit einer Sinusspannungsversorgung der Periode T verbunden und eingerichtet ist, an die Spule einen Haltestrom zu liefern, unter dem die Spule für eine T übersteigende Dauer (D) periodisch unterversorgt ist.

2. Vorrichtung nach Anspruch 1, **dadurch gekennzeichnet, dass** sie eingerichtet ist, der Spule einen Haltestrom der Periode kT/2 zu liefern, wobei k größer oder gleich 3 ist.

3. Vorrichtung nach einem der Ansprüche 1 und 2, **dadurch gekennzeichnet, dass** sie einen elektronischen Unterbrecher (6) aufweist, der von einer Steuervorrichtung (10) angesteuert wird.

4. Vorrichtung nach Anspruch 3, **dadurch gekennzeichnet, dass** die Steuervorrichtung (10) einen Sinusbogenzähler für die Sinusspannungsversorgung aufweist, wobei der elektronische Unterbrecher alle z Bögen mit z größer oder gleich 3 leitend wird.

5. Vorrichtung nach Anspruch 3 oder 4, **dadurch gekennzeichnet, dass** der elektronische Unterbrecher (6) einem Gleichrichter (11) vorgeschaltet ist.

6. Vorrichtung nach dem vorhergehenden Anspruch, **dadurch gekennzeichnet, dass** der Gleichrichter (11) ein Vollwellengleichrichter ist.

7. Vorrichtung nach einem der Ansprüche 3 bis 6, **dadurch gekennzeichnet, dass** der elektronische Unterbrecher (6) einen Triac aufweist.

8. Vorrichtung nach Anspruch 5 oder 6, **dadurch gekennzeichnet, dass** sie eine dem Gleichrichter (11) nachgeschaltete Freilaufdiode (14) aufweist.

9. Vorrichtung nach einem der vorhergehenden Ansprüche, **dadurch gekennzeichnet, dass** sie in Serie zur Spule (B) eine Trennschaltung (16) aufweist.

10. Vorrichtung nach dem vorhergehenden Anspruch, **dadurch gekennzeichnet, dass** sie parallel zur Trennschaltung (16) einen Varistor (17) aufweist.

11. Vorrichtung nach Anspruch 3, **dadurch gekennzeichnet, dass** die Steuervorrichtung (10) ein Zeitverhalten aufweist, um die Spule während einer ersten Phase mit permanenter Leitfähigkeit des elektronischen Unterbrechers (6) so zu versorgen, dass ein Anzugsstrom erzeugt wird, und sie dann während einer zweiten Phase mit nicht permanenter Leitfähigkeit des elektronischen Unterbrechers so zu versorgen, dass ein Haltestrom erzeugt wird.

12. Verfahren zum Versorgen einer einem Elektromotor zugeordneten Bremse, die eine Spule (B) und eine Bremseinrichtung aufweist, die unter der Wirkung eines von der Spule erzeugten Magnetfelds zwischen einer Bremsstellung und einer Stellung zur freien Drehung des Motors verlagert werden kann, wobei die Bremseinrichtung bei periodischer Unterversorgung der Spule für eine längere Dauer als T, insbesondere bei Unterversorgung für kT/2, wobei k größer oder gleich 3 ist, in einer Stellung zur freien Drehung des Motors gehalten wird.

**Claims**

1. Device (1) for the electrical energizing of a brake associated with an electric motor, this brake comprising a coil (B) and a braking member that can be displaced under the action of a magnetic field generated by the coil between a braking position and a position of free rotation of the motor, this device having to be linked to a sinusoidal voltage supply of period T and being devised so as to deliver to the coil a holding current, during which the coil is periodically under-energized for a duration (D) greater than T.

2. Device according to Claim 1, **characterized in that** it is devised so as to deliver to the coil a holding current of period $k\dfrac{T}{2}$, with k greater than or equal to 3.

3. Device according to one of Claims 1 and 2, **characterized in that** it comprises an electronic switch (6) controlled by a drive device (10).

4. Device according to Claim 3, **characterized in that** the drive device (10) comprises a counter of sinusoid arcs of the sinusoidal voltage supply, the electronic switch being turned on every z arcs, with z greater than or equal to 3.

5. Device according to Claim 3 or 4, **characterized in that** the electronic switch (6) is disposed upstream of a rectifier (11).

6. Device according to the preceding claim, **characterized in that** the rectifier (11) is a full-wave rectifier.

7. Device according to any one of Claims 3 to 6, **characterized in that** the electronic switch (6) comprises a triac.

8. Device according to Claim 5 or 6, **characterized in that** it comprises a freewheel diode (14) downstream of the rectifier (11).

9. Device according to any one of the preceding claims, **characterized in that** it comprises a circuit breaker (16) in series with the coil (B).

**10.** Device according to any one of the preceding claims, **characterized in that** it comprises a varistor (17) in parallel with the circuit breaker (16).

**11.** Device according to Claim 3, **characterized in that** the drive device (10) comprises a time lag for energizing the coil during a first phase with a permanent conduction of the electronic switch (6), in such a way as to generate an inrush current then, during a second phase, with a nonpermanent conduction of the electronic switch, so as to generate a holding current.

**12.** Process for energizing a brake associated with an electric motor, this brake comprising a coil (B) and a braking member that can be displaced under the action of a magnetic field generated by the coil between a braking position and a position of free rotation of the motor, in which process the braking member is held in the position of free rotation of the motor by periodically under-energizing the coil for a duration greater than T, in particular by under-energizing

it for $\mathrm{k}\dfrac{T}{2}$, with k greater than or equal to 3.

Fig.1

$U_e$

$U_s$

Fig.2

$U_e$

t

T

Fig.4

Fig.3

$U_s$

t

D

T

T/2

k.T/2

**EP 1 622 251 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2800528
- EP 0575023 B1
- EP 1008932 B1
- GB 2225679 A